# EUROPÄISCHE PATENTANMELDUNG

(11) **EP 2 568 369 A1**
(43) Veröffentlichungstag der Anmeldung: **13.03.2013**
(21) Anmeldenummer: 11007298.0
(22) Anmeldetag: 08.09.2011
(51) Int. Cl.: G06F 3/048, G06F 3/033, H04N 5/445

(54) **Gerät zur Auswahl von Multimedia-Informationen**

(71) Anmelder: fm marketing gmbh, 5162 Obertrum am See (AT)
(72) Erfinder: Maier, Ferdinand, 5202 Neumarkt am Wallersee (AT)
(74) Vertreter: von Bülow, Tam

(57) **Zusammenfassung**

Das Gerät zur Auswahl von Multimedia-Informationen enthält eine Bedieneinheit, die ein linear in eine Richtung hin- und herverschiebliches Betätigungsorgan (2) aufweist, das aus einer Neutralstellung verschieblich ist. Die Bedieneinheit (1) erzeugt in Abhängigkeit von der Verschiebestellung des Betätigungsorgans (2) ein Ausgangssignal. Weiter enthält sie eine Empfangseinrichtung (6) und eine Anzeigeeinrichtung (7) wobei auf der Anzeigeeinrichtung (7) Elemente (14-21) hintereinander abgebildet sind, die auswählbare Multimedia-Informationen aus dem Datenspeicher (9) enthalten. Die Elemente sind hintereinander abgebildet, derart, dass das jeweils vordere Element (14) die nachfolgenden Elemente (15-21) nur teilweise verdeckt und die jeweils hinteren Elemente kleiner sind als die jeweils vorderen Elemente. Bei Verschiebung des verschieblichen Betätigungsorgans (2) wird das jeweils vorderste Element (14) durch ein anderes ersetzt und alle weiteren angezeigten Elemente (16-21) ändern ihre Größe entsprechend ihrer Rangordnung. Die Geschwindigkeit dieser Änderung der Elemente (14-21) hängt von der Verschiebestellung des verschieblichen Betätigungsorgans (2) ab.

## Beschreibung

Die Erfindung betrifft ein Gerät zur Auswahl von Multimedia-Informationen gemäß dem Oberbegriff des Patentanspruches 1.

Ein solches Gerät ist aus der DE 602 21 876 T2 bekannt. Dort ist eine Programmführer-Datenauswahl-Vorrichtung zum Auswählen von Programmführer-Daten, die einem verfügbaren Programminhalt entsprechen, beschrieben, die folgendes umfasst: Eine Fernsteuerung mit mehreren Bedientasten, eine Steuereinheit, die Signale von der Fernsteuerung empfängt, und ein Fernsehmonitor. Die Steuereinheit kann dabei eine Set-Top-Box sein, die über verschiedene Datenquellen, wie z.B. Satellitenfernsehen, Kabelfernsehen, terrestrisches Fernsehen oder Internet, Daten empfängt, die auch Programminhaltdaten enthalten, wie sie beispielsweise von vielen Fernsehsendern unter der Bezeichnung "EPG" (E-lectronic Program Guide) übermittelt werden. Diese Programminhaltdaten werden an eine Inhaltdatensteuerschaltung gegeben, die die Daten für die Anzeige auf dem Fernsehmonitor konfiguriert. Die Daten werden auf dem Fernsehmonitor in Form von einer sich vertikal erstreckenden Bildlaufleiste und einer sich horizontal erstreckenden Bildlaufleiste angezeigt, wobei sich diese beiden Bildlaufleisten ir. einem Fokusbereich schneiden. Die in dem Fokusbereich dargestellten Programminhaltdaten können über die Fernsteuerung ausgewählt und das dazugehörige Fernsehprogramm angezeigt werden. Zum Bewegen der in den Bildlaufleisten enthaltenen Programminhaltdaten hat die Fernsteuerung vier individuelle Tasten für die Bewegungen "auf", "ab", "links", "rechts". Bei jedem Betätigen der entsprechenden Taste werden alle Elemente der vertikalen oder der horizontalen Bildlaufleiste um eine vordefinierte Position in der gewählten Richtung verschoben. Hierdurch erfolgt ein sog. Scrollen oder Verschieben der einzelnen Elemente. Will der Benutzer ein in der entsprechenden Bildlaufleiste relativ weit von dem Fokusfeld entferntes Programm auswählen, so muss er die entsprechende Taste mehrfach betätigen, was einige Zeit benötigt und lästig ist.

Ähnliche Geräte zur Auswahl von Multimedia-Informationen sind auch aus der WO 2004/055717 A und US 2003/001907 A1 bekannt. Auch die folgenden Schriften beschreiben die Verwendung von horizontalen und vertikalen Bildlaufleisten: WO 03/043318 A1, US 6,690,391 BI und EP 2001223 A1.

All diese bekannten Vorrichtungen haben den oben erwähnten Nachteil, dass eine vielfache Betätigung der entsprechenden Steuertasten notwendig ist. Auch führt die Darstellung einer Vielzahl von Elementen auf einer ebenen Fläche dazu, dass die Darstellung unübersichtlich wird.

Aufgabe der Erfindung ist es daher, das Gerät zur Auswahl von Multimedia-Informationen dahingehend zu verbessern, dass seine Bedienung vereinfacht ist.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Die Grundidee der Erfindung liegt darin, das "Scrollen" der auswählbaren Multimedia-Informationen durch ein in der Bedieneinheit, wie zb einer Fernsteuerung enthaltenes Betätigungsorgan durchzuführen, das geradlinig in mindestens einer Richtung hin- und herverschieblich ist. Je nach Verschiebung dieses Betätigungsorgans aus einer Neutralstellung erfolgt das "Scrollen" schneller oder langsamer. Die auswählbaren Multimedia-Informationen sind nach Art von Karteikarten hintereinander abgebildet, derart, dass das jeweils vordere Element die nachfolgenden Elemente nur teilweise verdeckt und die jeweils hinteren Elemente kleiner sind als die jeweils vorderen Elemente. Je nach Bewegungsrichtung des verschieblichen Betätigungsorgans wird das jeweils vorderste Element durch ein anderes Element ersetzt und alle angezeigten Elemente ändern ihre Größe entsprechend ihrer Rangordnung bzw. Reihenfolge. Hierdurch wird der visuelle Eindruck einer Bewegung der Elemente in der Tiefe, also in den Fernseher hinein bzw. aus dem Fernseher heraus, erweckt und damit ein 3-D-Effekt erreicht. Wird das verschiebliche Betätigungsorgan in seine Neutralstellung gebracht, so wird automatisch bis zum nächsten Element weiterbewegt und dann die Bewegung angehalten.

Nach einer Weiterbildung der Erfindung ist das verschiebliche Betätigungsorgan durch Feder- oder Magnetkraft in einer Neutralstellung gehalten. Um es aus der Neutralstellung heraus zu bewegen ist daher eine haptisch wahrnehmbare Kraft erforderlich, die mit der Entfernung aus der Neutralstellung zunimmt. Der Benutzer erhält hierdurch eine haptisch wahrnehmbare Rückmeldung und. über die Darstellung auf dem Bildschirm auch eine visuell wahrnehmbare Rückmeldung hinsichtlich der Geschwindigkeit des "Durchblätterns" der einzelnen Elemente. Sowohl die haptisch als auch die visuell wahrnehmbare Rückmeldung werden vom Benutzer als analoge Größen wahrgenommen. Die Verschiebung des verschieblichen Betätigungsorgans erzeugt damit auch ein analoges oder quasi-analoges Signal, das ggf. in feiner und für den Benutzer nicht wahrnehmbarer Abstufung auch digitalisiert werden kann.

Generell hat das Gerät nach der Erfindung durch das verschiebliche Betätigungsorgan nur eine Hauptnavigationsrichtung, die visuell einen dreidimensionalen Effekt erzeugt, nämlich aus der Ebene des Bildschirmes heraus bzw. in diese hinein. Im Gegensatz hierzu hat der bekannte Stand der Technik zwei Navigationsrichtungen ir. der Bildschirmebene.

Bei Auswahlmenüs mit mehreren Menüebenen wird das gleiche Prinzip angewandt. Wird beispielsweise ein Element der ersten Menüebene, beispielsweise ein bestimmter Fernsehsender ausgewählt, so erscheinen in einer zweiten Menüebene wiederum auszuwählende Aktionen in gleicher Darstellungsart mit der Aktionen wie "Programm ansehen", "Aufnehmen", "Vorprogrammieren" etc. ausgewählt werden können.

Eine weitere Möglichkeit, bestimmte Menüs oder Funktionen auszuwählen wird nach einer Weiterbildung der Erfindung durch einen Lage- oder Bewegungssensor realisiert, wobei hier statische, semi-dynamische und dynamische Positionen der Fernbedienung unterschieden werden können. Bei einer statischen Funktion wird die Lage der Fernsteuerung sensiert und beispielsweise die Fernbedienung und/oder das fernzubedienende Gerät ausgeschaltet, wenn die Fernbedienung eine bestimmte Lage eingenommen hat, beispielsweise so auf einem Tisch liegt, dass das Betätigungsorgan nach unten weist.

Bei semi-dynamischer Funktion hält der Benutzer die Fernbedienung normal in der Hand. Wird die Fernbedienung um ihre Längsachse um 90° gedreht, so wird ein Lautstärkenmenü aufgerufen und angezeigt und es kann mit dem verschieblichen Bedienorgan die Lautstärke eingestellt werden.

Bei dynamischer Funktion wird eine Bewegung in den sechs möglichen Freiheitsgraden erfasst, d.h. Linearbewegung längs der drei orthogonalen Raumachsen x, y und z und Drehbewegung um eine der drei möglichen Rotationsachsen, womit vorbestimmte Funktionen bzw. Menüs ausgewählt werden können.

Im Folgenden wird die Erfindung anhand von Ausführungsbeispielen im Zusammenhang mit der Zeichnung ausführlicher erläutert. Es zeigt:
- Fig. 1: eine schematische Darstellung des Gerätes zur Auswahl von MultimediaInformationen nach der Erfindung;
- Fig. 2-4: Abbildungen von Elementen auf einer Anzeigeeinrichtung bei drei aufeinanderfolgenden Darstellungen;
- Fig. 5: eine Abbildung von Elementen auf der Anzeigeeinrichtung anhand eines Untermenüs,
- Fig. 6: eine Abbildung von Elementen ähnlich Fig. 1 bei einem weiteren Ausführungsbeispiel der Erfindung.

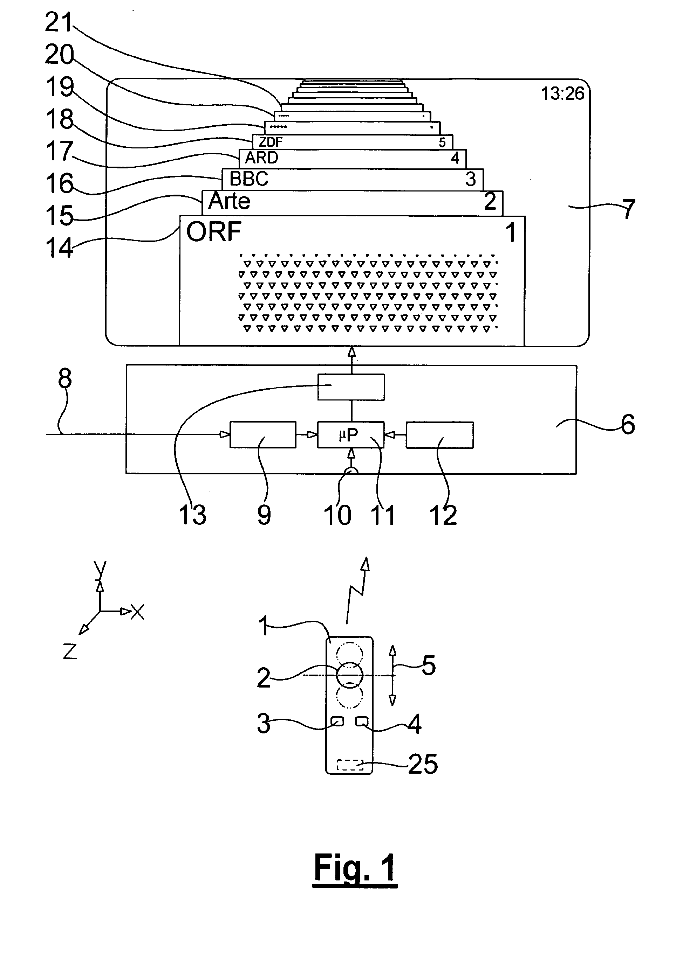

Das Gerät der Fig. 1 weist als Bedieneinheit eine Fernsteuerung 1 auf, die ein geradlinig in einer Richtung hin- und herverschiebliches Betätigungsorgan 2 besitzt sowie mehrere Bedientasten 3 und 4. Das Betätigungsorgan 2 kann eine verschiebliche Taste sein, die aus einer Neutralstellung geradlinig in Richtung des Doppelpfeiles 5 verschieblich ist, was durch gestrichelt dargestellte Positionen verdeutlich ist. Das Betätigungsorgan 2 ist vorzugsweise durch Federkraft oder Magnetkraft in eine neutrale Lage gebracht, aus der es nur durch Einwirkung mechanischer Kraft verschoben werden kann. Lässt der Benutzer das Betätigungsorgan 2 los, so wird es automatisch in die Neutralstellung bewegt. Das Betätigungsorgan 2 kann eine verschiebliche Taste sein. Es ist aber auch möglich, die gesamte obere Platte der Fernsteuerung 1 geradlinig in Richtung des Doppelpfeiles 5 hin und her zu bewegen. Die Fernsteuerung 1 erzeugt ein codiertes Signal, das die Verschiebestellung des Betätigungsorganes 2 bezüglich der Neutralstellung repräsentiert. Dieses Signal wird an ein Empfangsteil 6 geleitet, was vorzugsweise drahtlos erfolgt, beispielsweise über Infrarot- oder Funksignale.

Die Bedieneinheit (1) und das Betätigungsorgan (2) können aber auch in die Empfangseinheit (6) oder die Anzeigeeinrichtung (7) integriert sein und die Signalübertragung erfolgt über elektrische Leitungen.

Die weiteren Tasten 3 und 4 sind Funktionstasten, denen bestimmte Befehle zugewiesen sind, die ebenfalls von der Fernsteuerung 1 an die Empfangseinheit 6 übermittelt werden. So kann der Taste 3 beispielsweise eine Auswahl bzw. Bestätigungsfunktion (Ok-Funktion) zugewiesen werden und der Taste 4 die Funktion "zurück" mit der eine Menüebene zurückgeschaltet werden kann.

Wichtig ist, dass das Betätigungsorgan 2 stufenlos und vorzugsweise geradlinig verschieblich ist. Durch die erwähnte Feder- oder Magnetkraft erhält der Benutzer eine haptisch wahrnehmbare Rückmeldung hinsichtlich der Verschiebung des Betätigungsorganes 2 aus seiner Neutralstellung, die durch eine gestrichelte, horizontale Linie angedeutet ist. Der Begriff "stufenlos" sei hier so verstanden, dass vom Benutzer keine Stufen haptisch wahrgenommen werden, auch wenn intern bei digitaler Signalverarbeitung mit diskreten Stufen gearbeitet wird.

Die Empfangseinheit 6 ist mit einer Anzeigeeinrichtung 7 verbunden, die beispielsweise ein Fernsehbildschirm oder sonstiger Monitor ist. Die Empfangseinheit 6 hat einen oder mehrere Eingänge 8 für den Empfang von Signalen, wie z.B. Satellitenfernsehen, Kabelfernsehen, terrestrisches Fernsehen, Internet oder von externen Peripheriegeräten, wie z.B. DVD-Recorder, Video-Recorder (VCR) oder von einem externem Datenträger, wie z.B. externe Festplatte, USB-Stick oder ähnliches. Diese Daten enthalten auch Multimedia-Informationen wie z.B. Titel einer Sendung, Kurzbeschreibung deren Inhaltes, Zeitdauer usw., wie sie beispielsweise bei Fernsehprogrammen unter der Bezeichnung "EPG" (Electronic Program Guide) ausgestrahlt werden. Diese Multimedia-Informationen werden in einem Datenspeicher 9 zwischengespeichert und können von einem Mikroprozessor 11 abgerufen werden.

An den Mikroprozessor 11 ist eine weitere Empfangseinrichtung 10 angeschlossen, die die von der Fernsteuerung 1 ausgesandten Signale empfängt. Weiter ist an dem Mikroprozessor 11 ein Programmspeicher 12 angeschlossen, der das für die Auswahl der Multimedia-Informationen nötige Programm enthält. Schließlich ist der Mikroprozessor 11 über eine Grafiktreiberschaltung 13 mit der Anzeigeeinrichtung 7 verbunden.

Auf der Anzeigeeinrichtung 7 werden die einzelnen auswählbaren Multimedia-Informationen als Elemente 14-21 abgebildet und zwar allgemein gesprochen nach Art von hintereinander gestaffelten "Karteikarten". Dabei ist das vorderste Element 14 vollständig sichtbar, während alle weiteren Elemente 15-21 durch das jeweils vordere

Element teilweise verdeckt sind, so dass nur eine Titelleiste sichtbar ist. Weiter sind die jeweils hinteren Elemente kleiner als die jeweils vorderen Elemente, so dass visuell ein dreidimensionaler, perspektivischer Eindruck erweckt wird.

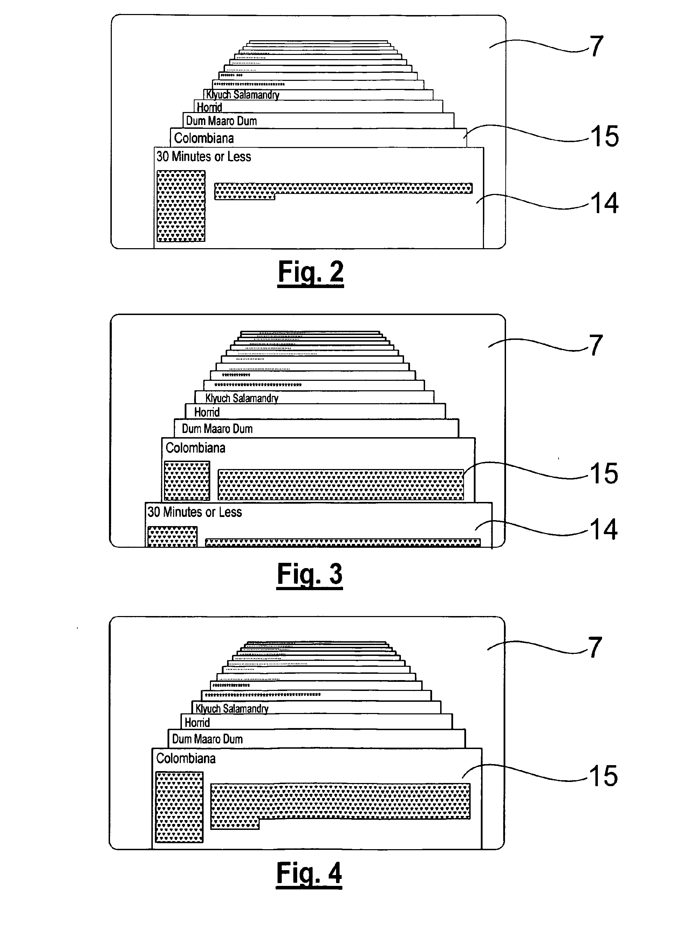

Zur Auswahl der gewünschten Multimedia-Informationen verschiebt der Benutzer das Betätigungsorgan 2 an der Fernsteuerung 1 in einer durch den Doppelpfeil 5 gekennzeichneten Richtung worauf auf der Anzeigeeinrichtung 7 die Elemente 14-21 "verschoben" werden, was anhand eines konkreten Ausführungsbeispieles im Zusammenhang mit den Fig. 2-4 erläutert wird.

In Fig. 2 sind mehrere Elemente von auswählbaren Filmen dargestellt. Das vorderste Element 14 bezeichnet einen Film mit dem Titel "30 Minutes or less". Das darauffolgende Elemente 15 bezeichnet einen Film mit dem Titel "Columbiana". Verschiebt der Benutzer das Betätigungsorgan 2 nach unten (in Fig. 1), so wird das erste Element 14 auf dem Bildschirm nach unten verschoben und das darauffolgende Element 15 wird zunehmend sichtbarer wie in Fig. 3 dargestellt ist. Beim weiteren Halten des Betätigungsorgans 2 in der Verschiebestellung verschwindet das Element 14 vollständig und das Element 15 tritt an die vorderste Stelle. Dabei verändert es seine Größe, so dass es in der in Fig. 4 dargestellten Abbildung die Größe des Elementes 14 der Fig. 2 einnimmt. Alle weiteren Elemente 16-21 rücken ebenfalls einen Platz in der Rangfolge vor und verändern ihre Größe entsprechend. Dieses "Durchblättern" oder "Scrollen" wird solange fortgesetzt, wie der Benutzer das Betätigungsorgan 2 aus der Neutralstellung verschoben hält.

Die Geschwindigkeit dieses "Scrollens" wird durch die Verschiebestellung des Betätigungsorgans 2 beeinflusst. Je weiter der Benutzer das Betätigungsorgan 2 aus der Neutralstellung herausbewegt, desto schneller erfolgt das Verschieben der Elemente. Dabei kann auch die Beschleunigung der Bewegung des Betätigungsorgans 2 ausgewertet werden und bei der Darstellung auf dem Bildschirm 7 berücksichtigt werden. Dieses Verschieben kann in beiden. durch den Doppelpfeil 5 dargestellten Richtungen erfolgen. Der Benutzer kann sinnbildlich gesprochen vorwärts und rückwärts blättern und dies mit einer von ihm bestimmten Geschwindigkeit. Verschiebt er beispielsweise bei der in Fig. 4 dargestellten Position das Bedienorgan 2 nach oben, so wird "zurückgeblättert" und das Element 14 erscheint wieder entsprechend den Fig. 3 und 2.

Sobald der Benutzer das Betätigungsorgan 2 loslässt, gelangt es aufgrund der beschriebenen Feder- oder Magnetkräfte in die Neutralstellung, worauf die Anzeige der Elemente 14-21 noch in der zuvor gewählten Bewegungsrichtung weiterläuft, bis das vorderste Element seine vollständige Größe erreicht hat.

Alternativ kann auch vorgesehen sein, dass der Benutzer das Betätigungsorgan 2 nur einmal kurz aus der Neutralstellung auslenkt und dann wieder loslässt, wobei die Darstellung auf dem Bildschirm 7 ohne Auslenkung des Betätigungsorgan 2 solange weiterläuft, bis der Benutzer den Vorgang abbricht, was durch erneutes Bewegen des Betätigungsorgans 2, Drücken einer weiteren Taste 3 oder 4 oder durch Bewegung der Fernsteuerung als Ganzes erfolgen kann, wobei letzteres durch den Lage- und/oder Bewegungssensor 24 erfasst wird.

Je nach Anzahl der zur Verfügung stehencen auswählbaren Multimedia-Informationen werden bei dem beschriebenen Durchblättern neue Elemente angezeigt. Die Anzahl der anzuzeigenden Elemente ist prinzipiell frei wählbar und bestimmt sich nach der Übersichtlichkeit.

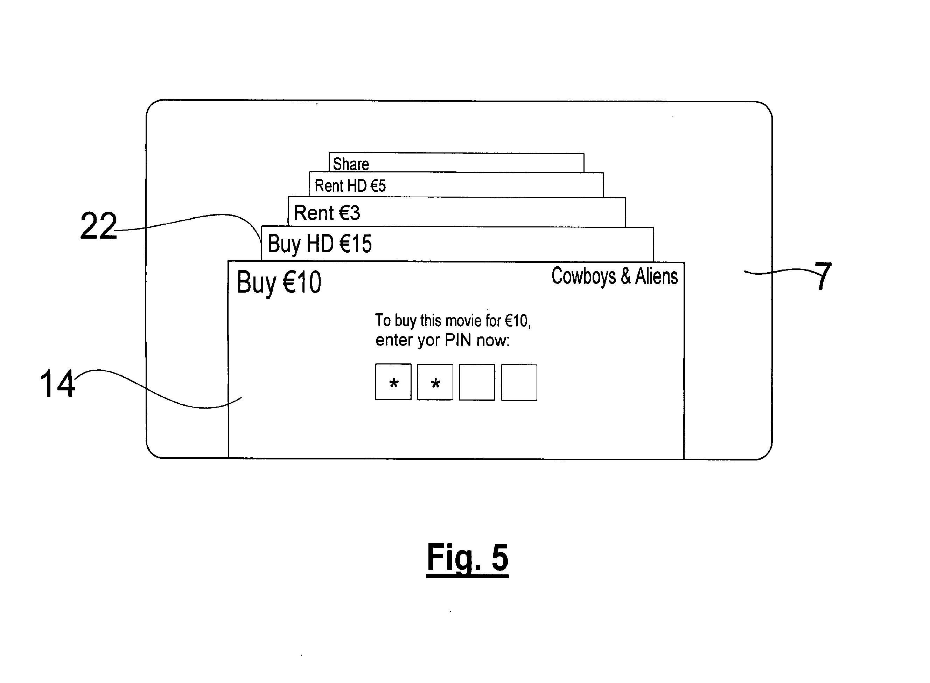

Hat der Benutzer mittels des Bedienorganes 2 die gewünschte Multimedia-Information als vorderstes Element 14 auf der Anzeigeeinrichtung 7 platziert, so kann er durch Betätigen einer der Tasten 3 oder 4 ein Untermenü aufrufen, das in Fig. 5 dargestellt ist. Anstelle einer Betätigung einer der Tasten 3 oder 4 kann das Aufrufen des entsprechenden Untermenüs auch durch Bewegung der Fernbedienung 1 in Zusammenwirken mit dem Lage und/oder Bewegungssensor 25 erfolgen. In diesem Untermenü kann er am dargestellten Beispiel auswählen, ob er einen bestimmten Film per "Video on demand" kauft, mietet, etc. Die Darstellung der Elemente erfolgt in gleicher Weise wie bei den Ausführungsbeispielen der Fig. 1-4. Auch hier erfolgt das "Durchblättern" der einzelnen Elemente mit einer Geschwindigkeit die der Verschiebung des Betätigungsorgans 2 entspricht.

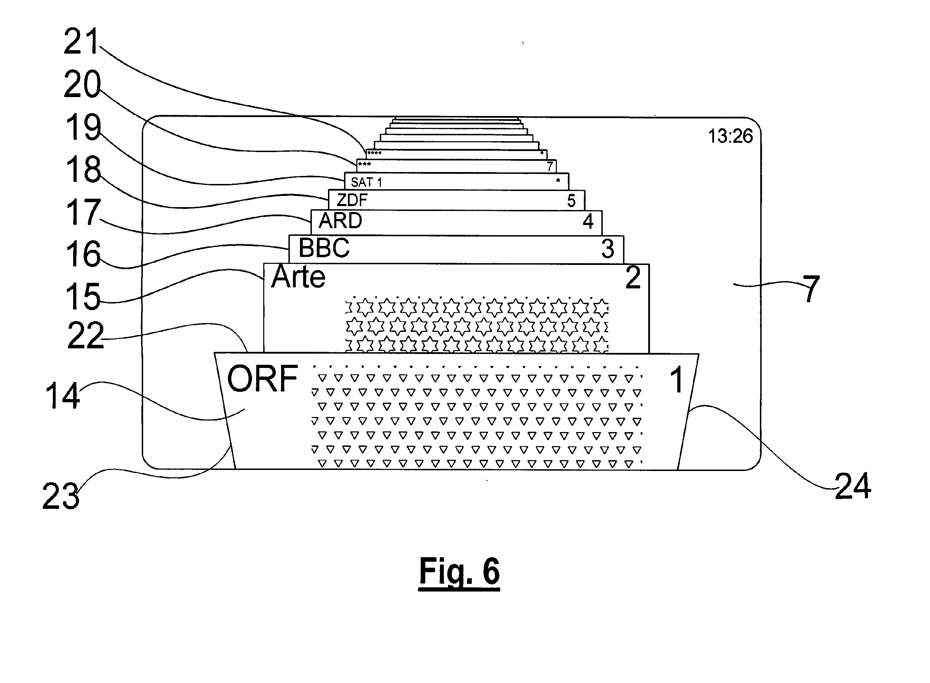

Fig. 6 zeigt eine modifizierte Variante, bei der das vorderste Element 14 nicht vertikal nach unten verschoben wird, wie in Fig. 3 sondern so abgebildet wird, als würde eine Karteikarte nach vorne aus der Bildschirmebene herausgeklappt. Dabei wird der obere Rand 22 des Elementes 14 horizontal in Richtung der X-Achse vergrößert, während die Seitenränder 23 und 24 schräg gestellt werden und so der Eindruck einer perspektivischen Darstellung entsteht.

Als weitere Variante kann auch dargestellt werden, dass das vorderste Element 14 durchsichtiger wird und das dahinterliegende Element 15 kontinuierlich deutlicher wird, bis dass das vorderste Element 14 endgültig verschwunden ist und alle weiteren Elemente um eine Position vorrücken.

Die geschilderten Prinzipien werden bei allen möglichen Menüs angewandt, so dass der Eindruck entsteht, die Elemente würden sich entlang der Z-Achse aus der Bildschirmebene (X, Y) heraus- oder in diese hineinbewegen.

Als zusätzliche Merkmale können vorgesehen sein, dass die Fernsteuerung einen Lage- oder Bewegungssensor 25 enthält und in Abhängigkeit von dessen Ausgangssignal zusätzliche Funktionen ausgelöst werden.

Bei diesen zusätzlichen Funktionen können statische, semi-dynamische und dynamische Funktionen unterschieden werden. Bei statischer Funktion erzeugt der Lagesensor 25 ein Signal, das die statische Lage der Fernsteuerung kennzeichnet, also welche Seite der üblicherweise sechs Seiten der Fernsteuerung, bezogen auf die Erdoberfläche nach oben, nach unten, rechts oder links weist. Mit diesem Signal können bestimmte Funktionen aktiviert oder deaktiviert werden. Beispielsweise kann die Fernsteuerung oder das fernzusteuernde Gerät ein- oder ausgeschaltet werden, wenn eine bestimmte Lage erkannt wird. Auch weitere Funktionen sind realisierbar, wie z.B. das Ein- oder Ausschalten einer Beleuchtung der Fernsteuerung, stumm schalten eines Lautsprechers etc.

Bei der semi-dynamischen Funktion stellt ein Lagesensor den Wechsel von einer Lage in eine andere Lage fest oder ein Bewegungssensor vorbestimmte Bewegungen, woraus ebenfalls Steuersignale erzeugt werden, mit denen vorgegebenen Funktionen ausgelöst werden. Beispielsweise kann durch eine solche Lageänderung oder Bewegung ein bestimmtes Untermenü aufgerufen werden, wie z.B. ein Menü zur Änderung der Lautstärke, zu Änderungen von Grundeinstellungen eines Fernsehgerätes wie Farbe, Helligkeit etc. Auch können die Funktionen der beschriebenen Tasten 3 und 4 für "Auswahl" und "Zurück" hiervon übernommen werden.

Bei der dynamischen Funktion mit einem Bewegungssensor wird die Bewegung in den sechs möglichen Freiheitsgraden erfasst und das von dem Bewegungssensor erzeugte Signal kann vorgegebene Funktionen auslösen, wie beispielsweise ebenfalls Änderung der Lautstärke oder ähnliches.

Zusammenfassend schafft die Erfindung ein Gerät zur Auswahl von Multimedia-Informationen, bei dem das Betätigungsorgan für die Auswahl nur längs einer geraden Linie zu bewegen ist und die Verschiebung des Betätigungsorganes die Geschwindigkeit der Darstellung der Elemente auf eine Anzeigeeinrichtung bestimmt. Die Darstellung der Elemente ist so gewählt, dass der Eindruck einer eindimensionalen Bewegung in die Bildschirmebene hinein oder aus dieser heraus entsteht und mit der Bewegungsrichtung des Betätigungsorgans übereinstimmt. Die "Tiefe" bezogen auf die z-Achse in Fig.1 wird im Ergebnis durch perspektivische Projektion auf die xy-Ebene simuliert. Der Benutzer erhält durch das feder- oder magnetvorgespannte Betätigungsorgan eine haptische Rückmeldung, die mit der visuellen Rückmeldung übereinstimmt. Hierdurch ist die Bedienung des Gerätes wesentlich vereinfacht.

## Patentansprüche

1. Gerät zur Auswahl von Multimedia-Informationen mit einer Bedieneinheit (1) die ein Betätigungsorgan (2) aufweist und Signale an eine Empfangseinheit (6) überträgt, mit einer mit der Empfangseinheit (6) verbundenen Anzeigeeinrichtung (7), auf der mehrere Elemente (14-21) gleichzeitig abgebildet werden, die auswählbare Multimedia-Informationen darstellen, **dadurch gekennzeichnet,**
**dass** das Betätigungsorgan (2) der Bedieneinheit (1) in mindestens einer Richtung (5) hin und her aus einer Neutralstellung verschieblich ist, dass die Bedieneinheit (1) in Abhängigkeit von der Verschiebestellung des verschieblichen Betätigungsorgans (2) abhängiges Ausgangssignal erzeugt,
**dass** die Elemente auf der Anzeigeeinrichtung (7) hintereinander abgebildet sind, derart, dass das jeweils vordere Element (14) die nachfolgenden Elemente (15-21) nur teilweise verdeckt und die jeweils hinteren Elemente kleiner sind als die jeweils vorderen Elemente,
**dass** die Empfangseinheit (6) die abgebildeten Elemente (14-21) in Abhängigkeit von dem Ausgangssignal der Bedieneinheit (1) derart verändert, dass das jeweils vorderste Element (14) durch ein anderes Element (15) ersetzt wird und alle weiteren angezeigten Elemente (16-21) ihre Größe entsprechend ihrer Rangordnung ändern und
**dass** die Geschwindigkeit der Änderung der Elemente (14-21) von der Verschiebestellung des verschieblichen Betätigungsorgans (2) abhängt.

2. Gerät nach Anspruch 1, **dadurch gekennzeichnet, dass** das Betätigungsorgan (2) nur in einer Richtung (5) hin- und herverschieblich ist.

3. Gerät nach Anspruch 1 oder 2, **dadurch gekennzeichnet, dass** das Betätigungsorgan (2) durch Feder- oder Magnetkraft in eine Neutralstellung vorgespannt ist und ein Verschieben des Betätigungsorgans (2) gegen diese Kraft erfolgt.

4. Gerät nach einem der Ansprüche 1 bis 3, **dadurch gekennzeichnet, dass** die Empfangseinrichtung (6) einen Datenspeicher (9) aufweist, in welchem die auswählbaren Multimedia-Informationen gespeichert sind.

5. Gerät nach einem der Ansprüche 1 bis 4, **dadurch gekennzeichnet, dass** die Bedieneinheit (1) in die Empfangseinheit (6) oder die Anzeigeeinrichtung (7) integriert ist.

6. Gerät nach einem der Ansprüche 1 bis 4, **dadurch gekennzeichnet, dass** die Bedieneinheit (1) eine von der Empfangseinheit (6) und der Anzeigeeinrichtung (7) getrennte Fernsteuerung ist.

7. Gerät nach einem der Ansprüche 1 bis 6, **dadurch gekennzeichnet, dass** die Bedieneinheit (1) einen Lage- und/oder Bewegunssensor (25) aufweist, dessen Ausgangssignal vorbestimmte Funktionen der Empfangseinheit (6) und/oder der Anzeigeeinrichtung (7) steuert.

8. Gerät nach Anspruch 7, **dadurch gekennzeichnet, dass** der Lage- oder Bewegungssensor (25) statistische, semi-dynamische oder dynamische Funktionen der Empfangseinheit (6) und/oder der Anzeigeeinrichtung (7) steuert.
